(19) **Europäisches Patentamt European Patent Office Office européen des brevets**

(11) **EP 4 763 803 A1**

(12) **EUROPEAN PATENT APPLICATION**
published in accordance with Art. 153(4) EPC

(43) Date of publication:
**24.06.2026   Bulletin 2026/26**

(21) Application number: **24877632.0**

(22) Date of filing: **10.10.2024**

(51) International Patent Classification (IPC):
*C01B 32/158* (2017.01)     *C01B 32/174* (2017.01)
*C01G 53/00* (2025.01)      *H01M 4/62* (2006.01)
*H01M 4/131* (2010.01)      *H01M 4/134* (2010.01)
*H01M 4/505* (2010.01)      *H01M 4/525* (2010.01)
*H01M 4/38* (2006.01)       *H01M 10/052* (2010.01)

(52) Cooperative Patent Classification (CPC):
**C01B 32/158; C01B 32/174; C01G 53/00;
H01M 4/131; H01M 4/134; H01M 4/38;
H01M 4/505; H01M 4/525; H01M 4/58; H01M 4/62;
H01M 10/052;** Y02E 60/10

(86) International application number:
**PCT/KR2024/096309**

(87) International publication number:
**WO 2025/080097 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.10.2023   KR 20230137203**

(71) Applicant: **LG Energy Solution, Ltd.
Seoul 07335 (KR)**

(72) Inventors:
• **KIM, Young Jae
Daejeon 34122 (KR)**

• **PARK, Joo Yong
Daejeon 34122 (KR)**
• **LIM, Han Min
Daejeon 34122 (KR)**
• **KIM, Tae Gon
Daejeon 34122 (KR)**
• **PARK, Sang Hyun
Daejeon 34122 (KR)**
• **KIM, Cho Won
Daejeon 34122 (KR)**

(74) Representative: **Hoffmann Eitle
Patent- und Rechtsanwälte PartmbB
Arabellastraße 30
81925 München (DE)**

(54) **MULTI-WALLED CARBON NANOTUBE POWDER, AND CONDUCTIVE MATERIAL DISPERSION SOLUTION AND LITHIUM SECONDARY BATTERY, WHICH COMPRISE SAME**

(57)    The present invention relates to a multi-walled carbon nanotube powder, a conductive material dispersion solution comprising the carbon nanotube powder, and a lithium secondary battery comprising the carbon nanotube powder. The multi-walled carbon nanotube powder, in a dry powder state, has, in a particle size distribution (PSD) measured by a particle size analyzer, a volume cumulative 50% average particle diameter ($D_{50}$) of 10-20 $\mu$m, a volume cumulative 90% average particle diameter ($D_{90}$) of 20-40 $\mu$m and a maximum particle diameter ($D_{max}$) of 45-70 $\mu$m, and contains 1.0-3.0 atom% of oxygen atoms, measured by XPS analysis, the particle size characteristics thereof in a powder state are controlled such that excellent dispersibility can be exhibited in an actual electrode, thereby enabling the viscosity of a dispersion solution to be lowered, and uniform dispersion thereof in an electrode is possible such that the resistance characteristics and lifespan characteristics of a lithium secondary battery can be improved.

EP 4 763 803 A1

Description

## TECHNICAL FIELD

The present invention relates to multi-walled carbon nanotube powder with excellent particle size characteristics, a conductive agent dispersion including the same, and a lithium secondary battery including the multi-walled carbon nanotube powder.

## BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

In order to prepare a battery having high energy density, it is important to use a positive electrode active material having high capacity characteristics, but materials included in a positive electrode may also be an important factor. For this purpose, research is being conducted to maximize a ratio of the active material and minimize amounts of a conductive agent and a binder, but since there is a problem in that an increase in unit price of a cell is very large compared to a degree of performance improvement when an amount of the active material used is increased, it is not easy to apply this to actual mass production.

Accordingly, a recent research trend is to increase price competitiveness while satisfying certain energy density or higher.

Carbon nanotubes (CNTs) are widely used as the conductive agent, wherein the reason for this is that the CNTs are advantageous for forming a conductive network due to better conductivity and length characteristics than carbon black. Among the carbon nanotubes, single-walled carbon nanotubes (SWCNTs) are advantageous for forming the conductive network, but since the single-walled carbon nanotubes are not easy to be dispersed and are expensive, they have a very big disadvantage in terms of price competitiveness although their performance is excellent.

Thus, the present invention aims to provide a conductive agent which is superior in terms of performance while also having better price competitiveness.

## DISCLOSURE OF THE INVENTION

### TECHNICAL PROBLEM

An aspect of the present invention provides multi-walled carbon nanotube powder which may control viscosity of a dispersion to a low level due to excellent dispersibility in the dispersion by including an appropriate amount of an oxygen functional group while having a particle size distribution characterized by a relatively small particle size in which size and ratio of large particles are small, and accordingly, may be uniform distributed in an electrode due to excellent dispersibility also in an electrode slurry.

Another aspect of the present invention provides a lithium secondary battery having improved lifetime and excellent output due to low resistance by using the multi-walled carbon nanotubes, which are uniformly distributed in the electrode due to the excellent dispersibility, in the electrode.

### TECHNICAL SOLUTION

[1] According to an embodiment, provided is multi-walled carbon nanotube powder having an average particle diameter ($D_{50}$) at a cumulative volume of 50% of 10 $\mu$m to 20 $\mu$m, an average particle diameter ($D_{90}$) at a cumulative volume of 90% of 20 $\mu$m to 40 $\mu$m, a maximum particle diameter ($D_{max}$) of 45 $\mu$m to 70 $\mu$m, in a particle size distribution (PSD) measured by a particle size analyzer in a dry powder state, and a content of oxygen atoms, which is measured by X-ray photoelectron spectroscopy (XPS) analysis, of 1.0 at% to 3.0 at%.

[2] The multi-walled carbon nanotube powder of [1] above, wherein the average particle diameter ($D_{50}$) at a cumulative

volume of 50% may be in a range of 13 $\mu$m to 19 $\mu$m.

[3] The multi-walled carbon nanotube powder of [1] and/or [2] above, wherein the average particle diameter ($D_{90}$) at a cumulative volume of 90% may be in a range of 28 $\mu$m to 40 $\mu$m.

[4] The multi-walled carbon nanotube powder of at least one of [1] to [3] above, wherein the maximum particle diameter ($D_{max}$) may be in a range of 54 $\mu$m to 70 $\mu$m.

[5] The multi-walled carbon nanotube powder of at least one of [1] to [4] above, wherein the content of oxygen atoms, which is measured by XPS analysis, may be in a range of 1.5 at% to 2.5 at%.

[6] The multi-walled carbon nanotube powder of at least one of [1] to [5] above, wherein a BET specific surface area may be in a range of 150 m$^2$/g to 300 m$^2$/g.

[7] According to another embodiment, provided is a conductive agent dispersion including the above-described multi-walled carbon nanotube powder, a dispersant, and an organic solvent.

[8] The conductive agent dispersion of [7] above, wherein 5 parts by weight to 60 parts by weight of multi-walled carbon nanotubes and 5 parts by weight to 60 parts of the dispersant may be included based on 100 parts by weight of the conductive agent dispersion.

[9] The conductive agent dispersion of [7] and/or [8] above, wherein the dispersant may include at least one selected from the group consisting of polyacrylate, polyvinylidene fluoride (PVDF), polyvinylpyrrolidone (PVP), polyvinyl alcohol, polyacrylamide, polyethyleneoxide, carboxymethyl cellulose (CMC), and diisopropylamine (DIPA).

[10] According to another embodiment, provided is a lithium secondary battery including a positive electrode including a positive electrode collector and a positive electrode material mixture layer; a negative electrode including a negative electrode collector and a negative electrode material mixture layer; and a separator disposed between the positive electrode and the negative electrode, wherein at least one of the positive electrode material mixture layer and the negative electrode material mixture layer includes the above-described multi-walled carbon nanotube powder.

[11] The lithium secondary battery of [10] above, wherein the positive electrode material mixture layer may include a positive electrode active material, and the positive electrode active material may include at least one selected from the group consisting of a lithium nickel-based oxide and a lithium metal phosphate-based compound.

[12] The lithium secondary battery of [11] above, wherein the positive electrode active material is a single particle type, and has a degree of single particle formation ($D_{50}/D_{mean}$), which is a ratio of a volume-cumulative average particle diameter ($D_{50}$) to an average particle diameter ($D_{mean}$) of nodules, of 1 to 10.

[13] The lithium secondary battery of [11] and/or [12] above, wherein the lithium nickel-based oxide may have a composition represented by Formula 1, and the lithium metal phosphate-based compound may have a composition represented by Formula 2.

$$[\text{Formula 1}] \qquad Li_{1+x}Ni_aCo_bM^1{}_cM^2{}_dO_{2-e}X_e$$

In Formula 1, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$, and

$$[\text{Formula 2}] \qquad Li_{1+x}[Fe_{1-y}M_y]PO_4$$

In Formula 2, M includes at least one selected from the group consisting of Mn, Co, Ni, Al, Mg, and Ti, and - $0.5 \leq x \leq 0.5$ and $0 \leq y < 1$.

[14] The lithium secondary battery of at least one of [10] to [13] above, wherein the negative electrode material mixture layer may include a negative electrode active material, and the negative electrode active material may include at least one selected from the group consisting of a silicon-based active material, a carbon-based active material, and a silicon-carbon composite active material.

**ADVANTAGEOUS EFFECTS**

Since multi-walled carbon nanotubes according to the present invention may control viscosity of a dispersion to a low level due to excellent dispersibility in the dispersion by having a large amount of an oxygen functional group and a particle size distribution characterized by a relatively small particle size in which size and ratio of large particles are small, and accordingly, may be uniform distributed in an electrode due to excellent dispersibility also in an electrode slurry.

Also, a lithium secondary battery according to the present invention may be expected to have an effect in which lifetime is improved and output is excellent due to low resistance by using the multi-walled carbon nanotubes, which are uniformly distributed in the electrode due to the excellent dispersibility, in the electrode.

## MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, a "specific surface area" is measured by a BET method, wherein, specifically, the specific surface area may be calculated from a nitrogen gas adsorption amount at a liquid nitrogen temperature (77K) using BELSORP-mino II by BEL Japan Inc.

In the present invention, the expression "single particle type" denotes a particle composed of 30 or less nodules, wherein a single particle type particle is a concept that includes a single particle composed of one nodule and a pseudo-single particle as a composite of 2 to 30 nodules.

The "nodule" is a sub-particle unit constituting the single particle and the pseudo-single particle, wherein the nodule may be a single crystal without a crystalline grain boundary, or may be a polycrystal in which grain boundaries do not exist in appearance when observed by using a scanning electron microscope with a field of view of 5,000 times to 20,000 times.

In the present invention, a "secondary particle" means a particle formed by aggregation of tens to hundreds of primary particles. More specifically, the secondary particle is an aggregate of 50 or more primary particles.

The expression "particle" used in the present invention may include any one or all of the single particle, the pseudo-single particle, the primary particle, the nodule, and the secondary particle.

An "average particle diameter ($D_{mean}$) of the nodules" in the present invention uses an average value of particle diameters after the particle diameter of each nodule is obtained for about 30 particles including one or more nodules by photographing the positive electrode active material particles with a scanning electron microscope (SEM).

$D_{30}$, $D_{90}$, and $D_{max}$ in the present specification may be defined as particle diameters at cumulative volumes of 50% and 90% and a maximum value of the particle diameter in a particle diameter distribution curve, respectively. The $D_{50}$, $D_{90}$, and $D_{max}$, for example, may be measured by using a laser diffraction method. The laser diffraction method may generally measure a particle diameter ranging from submicrons to a few mm and may obtain highly repeatable and high-resolution results.

Hereinafter, the present invention will be described in detail.

Multi-walled carbon nanotube powder according to the present invention, a multi-walled carbon nanotube dispersion, and a lithium secondary battery include at least one of configurations described below, and may include any combination between technically possible configurations among the configurations below.

### Multi-walled Carbon Nanotube Powder

Multi-walled carbon nanotube powder according to an embodiment of the present invention is characterized in that, in a particle size distribution (PSD) measured by a particle size analyzer in a dry powder state, an average particle diameter ($D_{50}$) at a cumulative volume of 50% is in a range of 10 $\mu$m to 20 $\mu$m, an average particle diameter ($D_{90}$) at a cumulative volume of 90% is in a range of 20 $\mu$m to 40 $\mu$m, a maximum particle diameter ($D_{max}$) is in a range of 45 $\mu$m to 70 $\mu$m, and a content of oxygen atoms, which is measured by X-ray photoelectron spectroscopy (XPS) analysis, is in a range of 1.0 at% to 3.0 at%.

The average particle diameters at cumulative volumes of 50% and 90% and the maximum particle diameter according to an embodiment of the present invention are not measured in a state where the multi-walled carbon nanotubes are dispersed in an organic solvent, but are measured in a dry powder state under aero conditions, wherein although these values are different from values measured in the dispersed state, it may be understood that these values are substantially the same as a shape and a size of the particles that exist and are distributed in an active material layer of an electrode.

That is, in general, a particle size distribution is utilized to confirm a degree of dispersion in a dispersion state by a particle size analyzer after dispersing a conductive agent with a dispersant in an organic solvent. In a specifically measured particle size distribution, in a case in which there are many large-diameter particles, it is considered that dispersion is poor, and in a case in which there are excessively many small-diameter particles, it is considered that overdispersion occurs. However, since multi-walled carbon nanotubes according to an embodiment of the present invention are characterized by measuring a particle size distribution in a powder state by a particle size analyzer and specifying an amount of an oxygen functional group at the same time, dispersion thereof in a dispersion or in an electrode is easy to facilitate control of viscosity of the dispersion, and accordingly, characteristics of the multi-walled carbon nanotubes, which may be uniformly distributed in the electrode, are intended to be defined.

In the particle size distribution in the dry powder state, the multi-walled carbon nanotubes according to the embodiment of the present invention have an average particle diameter ($D_{50}$) at a cumulative volume of 50% of 10 $\mu$m to 20 $\mu$m, have an average particle diameter ($D_{90}$) at a cumulative volume of 90% of 20 $\mu$m to 40 $\mu$m, and have a maximum particle diameter ($D_{max}$) of 45 $\mu$m to 70 $\mu$m.

The average particle diameter ($D_{50}$) at a cumulative volume of 50% is in a range of 10 $\mu$m to 20 $\mu$m, may preferably be 12 $\mu$m or more, 13 $\mu$m or more, or 14 $\mu$m or more, and may also be 19.5 $\mu$m or less, 19 $\mu$m or less, or 18.5 $\mu$m or less. Also, the average particle diameter ($D_{90}$) at a cumulative volume of 90% is in a range of 20 $\mu$m to 40 $\mu$m, may preferably be 23 $\mu$m or more, 25 $\mu$m or more, 28 $\mu$m or more, 29 $\mu$m or more, 30 $\mu$m or more, 31 $\mu$m or more, or 32 $\mu$m or more, and may also be 39.5 $\mu$m or less, 39 $\mu$m or less, 38.5 $\mu$m or less, or 38 $\mu$m or less. Furthermore, the maximum particle diameter ($D_{max}$) is in a range of 45 $\mu$m to 70 $\mu$m, may preferably be 48 $\mu$m or more, 50 $\mu$m or more, 52 $\mu$m or more, 54 $\mu$m or more, 56 $\mu$m or more, or 58 $\mu$m or more, and may also be 69 $\mu$m or less, 68 $\mu$m or less, 67 $\mu$m or less, or 66 $\mu$m or less.

The above-described particle size distribution is a particle size distribution in which the $D_{90}$ is relatively small and the $D_{max}$ is suppressed to a minimum while the $D_{50}$ is maintained above a certain particle diameter, wherein dispersibility may also be excellent while the viscosity in the dispersion is maintained at a low level, uniform distribution in the electrode may be possible, and, since the particle size distribution is substantially the same as a particle size distribution of the multi-walled carbon nanotubes in the active material layer after an electrode slurry is applied onto a current collector and dried, formation of a conductive path may also be predicted.

Specifically, in a case in which the $D_{50}$ is less than 10 $\mu$m, the $D_{90}$ is less than 20 $\mu$m, or the $D_{max}$ is less than 45 $\mu$m, since there is a difficulty in forming the conductive path in the electrode due to degradation of length characteristics, it may be a factor in increasing resistance, and, in a case in which the $D_{50}$ is greater than 20 $\mu$m, the $D_{90}$ is greater than 40 $\mu$m, or the $D_{max}$ is greater than 70 $\mu$m, although the length characteristics may be evaluated as relatively excellent, there is a problem in that number characteristics are degraded, that is, there are many particles in an aggregated state so that the overall number may be decreased and a specific surface area may be reduced, and thus, electrode performance may be degraded due to a problem in that a minimum amount for forming the conductive path in the electrode is not reached.

Also, the multi-walled carbon nanotubes according to the embodiment of the present invention are characterized in that a content of oxygen atoms, which is measured by XPS analysis, is in a range of 1.0 at% to 3.0 at%.

The content of oxygen atoms is a content of oxygen atoms derived from an oxygen functional group, wherein it may be due to a C-O bond or C=O bond present in the carbon nanotubes. The oxygen functional group may be generated from a grinding or disintegration process when the multi-walled carbon nanotubes are debundled from a large micron-scale bundle type, and may be bonded to a node or a cut surface present in the multi-walled carbon nanotubes. The oxygen functional group may help to achieve more effective dispersion during a dispersion process of the multi-walled carbon nanotubes. Accordingly, since particle size characteristics of the carbon nanotube powder with excellent dispersibility may be maintained also in the electrode even if the dispersion and the electrode are prepared through several dispersion processes, a more accurate improvement of conductivity of the electrode may be possible and predictability and reproducibility of the excellent conductivity may be significantly increased. Preferably, the oxygen atom content may be 1.2 at% or more, 1.5 at% or more, or 1.7 at% or more, and may also be 2.8 at% or less, 2.5 at% or less, or 2.3 at% or less.

The content of oxygen atoms may eventually vary depending on the extent to which the functional group containing oxygen is included, and, in a case in which the oxygen-containing functional group is included in the content as described above, since the particle size characteristics of the carbon nanotubes with excellent dispersibility, which are identified in the powder, may be achieved as they are in the electrode while the dispersibility of the multi-walled carbon nanotubes may be further improved, there is an advantage in that an electrode with excellent conductivity may be achieved with high reproducibility and predictability. However, in a case in which the oxygen atom content is less than 1.0 at%, there is no effect in improving the dispersibility, and, even if the particle size distribution is the same as described above, an effect of improving viscosity of the dispersion may be insignificant, and, in a case in which the oxygen atom content is greater than 3.0 at%, since a re-aggregation phenomenon begins to occur after dispersion, there may be a problem in that the viscosity is increased due to an increase in ratio of large-diameter particles in the dispersion even if the ratio of large-diameter particles is low in the powder state.

The multi-walled carbon nanotube powder according to the embodiment of the present invention may have a BET specific surface area of 150 $m^2$/g to 300 $m^2$/g. Although it is common to use a conductive agent with a large specific surface area, such as single-walled carbon nanotubes, because it is advantageous to secure conductivity even if a small amount is used, the conductive agent with a large specific surface area is very difficult to be dispersed and unit price of the material itself is also high so that the conductive agent with a large specific surface area may only be used in a very small number of cases in actual mass production. However, the present invention is advantageous in that a level of performance, which is not significantly inferior to that of the conductive agent with a large specific surface area, as well as excellent price competitiveness may be achieved by defining the particle size characteristics with excellent dispersibility even if the specific surface area is not high.

The specific surface area may preferably be 160 m$^2$/g or more, 170 m$^2$/g or more, 175 m$^2$/g or more, or 180 m$^2$/g or more, and may also be 290 m$^2$/g or less, 280 m$^2$/g or less, 270 m$^2$/g or less, 265 m$^2$/g or less, or 260 m$^2$/g or less. With respect to the multi-walled carbon nanotubes having a specific surface area in this range, there is an advantage in that conductive performance, which may be achieved from the above-described particle size distribution and oxygen atom content, may be secured while maximizing the price competitiveness.

According to an embodiment of the present invention, the multi-walled carbon nanotubes may be included in an amount of 0.5 part by weight to 10 parts by weight based on 100 parts by weight of the conductive agent dispersion, and may specifically be included in an amount of 0.7 part by weight to 7.0 parts by weight, more preferably, 0.7 part by weight to 5.0 parts by weight. When the above range is satisfied, transfer and addition of the electrode slurry are easy while high productivity is maintained. Also, since a solid content of the electrode slurry being prepared is not excessively low, occurrence of binder migration during drying of the electrode may be suppressed. Accordingly, electrode adhesion may be improved, and, since packing of an electrode active material layer may be effectively achieved, an electrode with a small thickness may be prepared.

**Conductive Agent Dispersion**

A conductive agent dispersion according to an embodiment of the present invention is characterized in that it includes the above-described multi-walled carbon nanotube powder, a dispersant, and an organic solvent. Since the multi-walled carbon nanotube powder is the same as described above, a description thereof will be omitted.

*Dispersant*

The conductive agent dispersion according to the embodiment of the present invention includes a dispersant, wherein the dispersant may include at least one selected from the group consisting of polyacrylate, polyvinylidene fluoride (PVDF), polyvinylpyrrolidone (PVP), polyvinyl alcohol, polyacrylamide, polyethyleneoxide, a hydrogenated nitrile-based copolymer, a cellulose-based compound, and diisopropylamine (DIPA). Herein, the hydrogenated nitrile-based copolymer may be a hydrogenated acrylonitrile-butadiene rubber, and the cellulose-based compound may be carboxymethyl cellulose (CMC) or hydroxyethyl cellulose (HEC).

Also, the dispersant in the conductive agent dispersion may be included in an amount of 0.5 part by weight to 20 parts by weight, particularly 0.7 part by weight to 10 parts by weight, and more particularly 0.9 part by weight to 8.0 parts by weight based on 100 parts by weight of the conductive agent dispersion. When the above range is satisfied, a carbon-based conductive agent may be smoothly dispersed in the conductive agent dispersion, energy density of the prepared electrode may be improved, and resistance may be reduced.

*Organic Solvent*

According to an embodiment of the present invention, the conductive agent dispersion includes an organic solvent, and the organic solvent may be an organic solvent containing one or more heteroatoms selected from the group consisting of a nitrogen atom (N) and an oxygen atom (O) having a lone pair of electrons.

Specifically, the organic solvent may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used. In consideration of compatibility with the electrode slurry, N-methyl pyrrolidone (NMP) is particularly preferred.

*Others*

According to an embodiment of the present invention, in the conductive agent dispersion, a solid content of the conductive agent dispersion may be in a range of 1 wt% to 10 wt%, particularly 2 wt% to 8 wt%, and more particularly 3.5 wt% to 5.5 wt%. When the above range is satisfied, the dispersion of the conductive agent dispersion may be effectively achieved while the viscosity of the conductive agent dispersion may be maintained at a low level. Herein, the solid content may denote the multi-walled carbon nanotubes and the dispersant which are included in the conductive agent dispersion.

The conductive agent dispersion of the present invention containing the above-described components may be prepared by mixing the multi-walled carbon nanotubes, the dispersant, and the organic solvent. In this case, the mixing may be performed using a conventional mixing method, specifically, a mixing device such as a homogenizer, a bead mill, a ball mill, a basket mill, an attrition mill, a universal stirrer, a clear mixer, a spike mill, or a TK mixer, and mixing order of each component is not particularly limited. That is, the conductive agent dispersion according to the present invention may be prepared by a method in which the dispersant is added and mixed after adding the multi-walled carbon nanotubes to the organic solvent, may be prepared by a method in which the multi-walled carbon nanotubes are mixed after first adding the dispersant to the organic solvent, and may be prepared by a method in which the multi-walled carbon nanotubes and the dispersant are added together to the organic solvent and then mixed.

A cavitation dispersion treatment may also be performed in order to increase the dispersibility of the multi-walled carbon nanotubes in the above mixing process. The cavitation dispersion treatment is a dispersion treatment method using a shock wave which is generated by rupture of vacuum bubbles formed in water when high energy is applied to the liquid, wherein the above method may disperse the multi-walled carbon nanotubes without impairing properties of the multi-walled carbon nanotubes. Specifically, the cavitation dispersion treatment may be performed by ultrasonic waves, a jet mill, or a shear dispersion treatment.

## Lithium Secondary Battery

A lithium secondary battery according to another embodiment of the present invention is characterized in that it includes a positive electrode including a positive electrode collector and a positive electrode material mixture layer; a negative electrode including a negative electrode collector and a negative electrode material mixture layer; and a separator disposed between the positive electrode and the negative electrode, wherein at least one of the positive electrode material mixture layer and the negative electrode material mixture layer includes the above-described multi-walled carbon nanotube powder.

Since the multi-walled carbon nanotube powder is the same as described above, only the remaining components will be described below.

### *Positive Electrode*

According to an embodiment of the present invention, the positive electrode may include a positive electrode collector and a positive electrode material mixture layer which is formed on the positive electrode collector and includes a positive electrode active material, wherein the positive electrode material mixture layer may include a positive electrode active material, and the positive electrode active material may include at least one selected from the group consisting of a lithium nickel-based oxide and a lithium metal phosphate-based compound.

The positive electrode active material may be a single particle type, and may have a degree of single particle formation ($D_{50}/D_{mean}$) of 1 to 10. Since the single particle type positive electrode active material has higher particle strength than a conventional positive electrode active material in a form of a secondary particle in which tens to hundreds of primary particles are aggregated, particle cracking during rolling is reduced. Also, with respect to the single particle type positive electrode active material according to the present invention, since the number of subcomponents (i.e., nodules) constituting the particle is small, changes due to volume expansion and contraction of the primary particles during charge and discharge are small, and accordingly, occurrence of cracks in the particles is significantly reduced.

A smaller degree of single particle formation may mean that the number of nodules constituting the particle is smaller. Accordingly, the degree of single particle formation may preferably be in a range of 1 to 8, 1 to 7, 1 to 6, or 1 to 5, and, in a case in which the above range is satisfied, since a degree of particle cracking may be reduced and rolling density may also be improved, it may be expected that both life characteristics and energy density are improved.

According to an embodiment of the present invention, a volume-cumulative average particle diameter ($D_{50}$) of the positive electrode active material may be in a range of 1.0 $\mu$m to 10.0 $\mu$m.

The positive electrode active material may have an average particle diameter at a cumulative volume of 50% of 1.0 $\mu$m to 10.0 $\mu$m, preferably 1.1 $\mu$m or more, 1.5 $\mu$m or more, 2.0 $\mu$m or more, 2.5 $\mu$m or more, 3.0 $\mu$m or more, or 3.5 $\mu$m or more, and 9.0 $\mu$m or less, 8.0 $\mu$m or less, 7.5 $\mu$m or less, 7.0 $\mu$m or less, 6.5 $\mu$m or less, 6.0 $\mu$m or less, 5.5 $\mu$m or less, or 5.0 $\mu$m or less. In a case in which the volume-cumulative average particle diameter $D_{50}$ of the positive electrode active material satisfies the above range, there is an advantage in that the rolling density may be increased without damage to the active material particles.

According to an embodiment of the present invention, the single particle type positive electrode active material may include 30 or less nodules, wherein an average particle diameter ($D_{mean}$) of the nodules may be in a range of 0.2 $\mu$m to 3.0 $\mu$m, the average particle diameter of the nodules may preferably be 0.3 $\mu$m or more, 0.5 $\mu$m or more, 0.7 $\mu$m or more, or

1.0 μm or more, and may be 2.8 μm or less, 2.5 μm or less, or 2.0 μm or less, and, in a case in which the above range is satisfied, since the range of the degree of single particle formation may be satisfied, the corresponding effect may be expected.

The positive electrode active material according to the present invention may include at least one selected from the group consisting of a lithium nickel-based oxide and a lithium metal phosphate-based compound. For example, the lithium nickel-based oxide may have a composition represented by Formula 1 below.

[Formula 1]        $Li_{1+x}Ni_aCo_bM^1_cM^2_dO_{2-e}X_e$

In Formula 1, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

In Formula 1, $M^1$ is Mn, Al, or a combination thereof, and may preferably be Mn or a combination of Mn and Al, $M^2$ is at least one selected from the group consisting of Zr, W, Y, Ba, Ca, Ti, Mg, Ta, and Nb, may preferably be at least one selected from the group consisting of Zr, Y, Mg, and Ti, and may more preferably be Zr, Y, or a combination thereof. The element $M^2$ is not necessarily included, but, in a case in which it is included in an appropriate amount, it may play a role in promoting grain growth during sintering or improving crystal structure stability. Also, X is an anion substituted at an oxygen site, wherein X may include N, P, S, F, or Cl.

1+x represents a molar ratio of lithium in the lithium nickel-based oxide, wherein x may satisfy $0 \leq x \leq 0.1$, $0 \leq x \leq 0.08$, $0 \leq x \leq 0.05$, $0 \leq x \leq 0.03$, or $0 \leq x \leq 0.02$.

a represents a molar ratio of nickel among total metals excluding lithium in the lithium nickel-based oxide, wherein a may satisfy $0.50 \leq a < 1.00$, $0.60 \leq a \leq 0.99$, $0.70 \leq a \leq 0.99$ or $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

b represents a molar ratio of cobalt among the total metals excluding lithium in the lithium nickel-based oxide, wherein b may satisfy $0 < b \leq 0.35$, $0.01 \leq b \leq 0.34$, $0.01 \leq b \leq 0.30$, $0.01 \leq b \leq 0.25$, $0.01 \leq b \leq 0.20$, or $0.01 \leq b \leq 0.15$.

c represents a molar ratio of element $M^1$ among the total metals excluding lithium in the lithium nickel-based oxide, wherein c may satisfy $0 < c \leq 0.35$, $0.01 \leq c \leq 0.34$, $0.01 \leq c \leq 0.30$, $0.01 \leq c \leq 0.25$, $0.01 \leq c \leq 0.20$, or $0.01 \leq c \leq 0.15$.

d represents a molar ratio of element $M^2$ among the total metals excluding lithium in the lithium nickel-based oxide, wherein d may satisfy $0 \leq d \leq 0.05$, $0 \leq d \leq 0.02$, or $0 \leq d \leq 0.01$.

e represents a molar ratio of element X among the total non-metals excluding oxygen in the lithium nickel-based oxide, wherein e may satisfy $0 \leq e \leq 0.05$, $0 \leq e \leq 0.02$, or $0 \leq e \leq 0.01$.

The lithium nickel-based oxide may further include a coating layer including at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S on a surface of the particle.

In a case in which the coating layer is present on the surface of the lithium nickel-based oxide particle, a contact between an electrolyte solution and the lithium nickel-based oxide is suppressed by the coating layer, and, as a result, an effect of reducing gas generation or transition metal dissolution due to a side reaction with the electrolyte solution may be obtained.

Preferably, the coating layer may include Co as the coating element. In a case in which the coating layer including Co is formed on the surface of the lithium nickel-based oxide particle in the form of a single particle and/or a pseudo-single particle, an effect of improving output may be obtained along with an effect of suppressing the side reaction with the electrolyte solution.

Also, the lithium metal phosphate-based compound may have a composition represented by Formula 2 below.

[Formula 2]        $Li_{1+x}[Fe_{1-y}M_y]PO_4$

In Formula 2, M includes at least one selected from the group consisting of Mn, Co, Ni, Al, Mg, and Ti, and $-0.5 \leq x \leq 0.5$ and $0 \leq y < 1$.

The lithium metal phosphate-based compound may be doped with M. In this case, since lattice structure and distance within an olivine crystal structure, as a crystal structure, are changed, diffusivity of lithium ions increases, and, as a result, electrochemical characteristics of the battery including the positive electrode active material may be improved.

x may be in a range of -0.5 to 0.5, may preferably be -0.3 or more, -0.1 or more, or 0 or more, and may be 0.5 or less, 0.4 or less, 0.3 or less, 0.2 or less, or 0.1 or less.

y may be 0 or more, may be less than 1, and may be 0.90 or less, 0.80 or less, 0.70 or less, 0.60 or less, 0.50 or less, 0.40 or less, 0.30 or less, 0.20 or less, 0.10 or less, or 0.05 or less.

The lithium metal phosphate-based compound, for example, may be $LiFePO_4$.

The lithium metal phosphate-based compound according to the present invention may be in a form of a single particle composed of only one primary particle, or in a form of an irregular secondary particle composed of 2 to 50 primary particles. In addition, the lithium metal phosphate-based compound may include an olivine structure, and may specifically be composed only of the olivine structure. The coating layer according to the present invention may be formed not only on the secondary particle but also on the primary particle. That is, the coating layer according to the present invention may be uniformly present on surfaces of the primary particles that are present in the secondary particle.

The coating layer may include a carbon coating layer having a graphite structure, and the coating layer may have a thickness of 0.5 nm to 5 nm. In a case in which the thickness of the coating layer is within the above range, there is an advantage in that electrical conductivity is improved while incoming and outgoing of lithium ions are not obstructed. Specifically, the thickness of the coating layer may be 0.5 nm or more, 1.0 nm or more, 1.5 nm or more, 2.0 nm or more, 2.5 nm or more, or 3.0 nm or more, and may be 5.0 nm or less.

The coating layer may be uniformly coated on a surface of the lithium metal phosphate-based compound. That is, the coating layer may be in a form of a thin film. The coating layer may improve ionic conductivity and electronic conductivity during charge and discharge of the battery including the positive electrode active material. The coating layer may include trace amounts of impurities, such as nitrogen, oxygen, and hydrogen, in addition to carbon.

The coating layer may be included in an amount of 0.5 wt% to 3 wt% based on a total weight of the lithium metal phosphate-based compound so as to improve the electrical conductivity while the incoming and outgoing of the lithium ions are not obstructed.

The positive electrode active material may be included in an amount of 90 wt% to 99 wt%, more specifically, 93 wt% or more, 95 wt% or more, 96 wt% or more, or 97 wt% or more, and 98.5 wt% or less, or 98 wt% or less based on a total weight of the positive electrode material mixture layer, and when the positive electrode active material is included in an amount within the above range, excellent capacity characteristics may be obtained.

Also, according to an embodiment of the present invention, the positive electrode may further include a binder. The binder improves adhesion between the positive electrode active material particles and adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 0.1 wt% to 10 wt%, preferably, 0.3 wt% or more, 0.5 wt% or more, 0.7 wt% or more, or 1.0 wt% or more, and 9.0 wt% or less, 8.5 wt% or less, 8.0 wt% or less, 7.5 wt% or less, 7.0 wt% or less, or 6.5 wt% or less based on the total weight of the positive electrode material mixture layer.

The positive electrode collector may include a metal having high conductivity, and is not particularly limited as long as it has no reactivity in a voltage range of the battery and the positive electrode material mixture layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode may be prepared according to a typical method of preparing a positive electrode except that the above-described positive electrode active material powder is used. Specifically, the positive electrode collector is coated with a positive electrode slurry composition, which is prepared by dissolving or dispersing the above-described positive electrode active material powder as well as optionally the binder, the conductive agent, and a dispersant, if necessary, in a solvent, and the positive electrode may then be prepared by drying and rolling the coated positive electrode collector.

The solvent may be a solvent normally used in the art, wherein the solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

*Negative Electrode*

In the lithium secondary battery according to the embodiment of the present invention, the negative electrode includes a negative electrode collector and a negative electrode material mixture layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used.

The negative electrode collector may typically have a thickness of 3 $\mu$m to 500 $\mu$m, and may preferably have a thickness of 300 $\mu$m or less, 200 $\mu$m or less, 100 $\mu$m or less, or 80 $\mu$m or less. Microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

A compound capable of reversibly intercalating and deintercalating lithium may be used as the negative electrode active material, for example, the negative electrode active material may include a carbon material such as artificial graphite, natural graphite, Kish graphite, pyrolytic carbon, meso-carbon microbeads, mesophase pitches, petroleum or coal tar pitch derived cokes, mesophase pitch-based carbon fibers, graphitized carbon fibers, amorphous carbon, soft carbon, or hard carbon; a (semi)metallic material alloyable with lithium such as Si, Al, Sn, Pb, Zn, Bi, In, Mg, Ga, Cd, a Si alloy, a Sn alloy, or an Al alloy; a (semi)metal oxide material which may be doped and undoped with lithium such as $SiO_b(0<b\leq2)$, $SnO_2$, vanadium oxide, and lithium vanadium oxide; a heterogeneous composite material such as a Si-C composite or a Sn-C composite; or a metallic lithium thin film, and any one thereof or a mixture of two or more thereof may be used.

Preferably, the negative electrode active material may include at least one selected from the group consisting of a silicon-based active material, a carbon-based active material, and a silicon-carbon composite active material, wherein, more preferably, the carbon-based active material may include at least one selected from the group consisting of artificial graphite, natural graphite, soft carbon, and hard carbon, the silicon-based active material may include pure Si particles and/or $SiO_b$ ($0<b\leq2$), and the silicon-carbon composite active material may include a Si-C composite. Also, a mixed active material, in which two or more of the above-descried materials are mixed, may be used as the negative electrode active material.

The negative electrode active material may be included in an amount of 60 wt% to 99 wt% based on a total weight of the negative electrode material mixture layer, may preferably be included in an amount of 70 wt% or more, 80 wt% or more, 85 wt% or more, or 90 wt% or more, and may also be included in an amount of 98 wt% or less, 97 wt% or less, or 95 wt% or less.

Preferably, the negative electrode active material may include at least one selected from the group consisting of the silicon-based active material, the carbon-based active material, and the silicon-carbon composite active material.

The negative electrode active material may be included in an amount of 70 wt% to 99 wt% based on a total solid content in a negative electrode slurry, may be included in an amount of 75 wt% or more, 80 wt% or more, 85 wt% or more, 90 wt% or more, or 95 wt% or more, and may also be included in an amount of 99.0 wt% or less, 98.5 wt% or less, 98.0 wt% or less, or 97.5 wt% or less. When the amount of the negative electrode active material satisfies the above range, excellent energy density, electrode adhesion, and electrical conductivity may be achieved.

The binder is a component that assists in the binding between the conductive agent, the active material, and the current collector, wherein the binder may typically be added in an amount of 0.1 wt% to 10 wt% based on the total weight of the negative electrode material mixture layer, may be included in an amount of 0.2 wt% or more, 0.3 wt% or more, or 0.5 wt% or more, and may also be included in an amount of 8 wt% or less or 5 wt% or less. Examples of the binder may include at least one selected from the group consisting of a styrene-butadiene copolymer, an acrylate styrene-butadiene copolymer, an acrylonitrile-butadiene copolymer, an acrylonitrile-butadiene-styrene copolymer, an acrylic rubber, a butyl rubber, a fluoro rubber, polytetrafluoroethylene, polyethylene, polypropylene, an ethylene propylene copolymer, polyethylene oxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, a phenol resin, an epoxy resin, and polyvinyl alcohol. Among them, the binder may include at least one selected from the group consisting of a styrene-butadiene copolymer, an acrylate styrene-butadiene copolymer, an acrylonitrile-butadiene copolymer, an acrylonitrile-butadiene-styrene copolymer, a carboxymethyl cellulose, a hydroxypropylmethyl cellulose, a hydroxypropyl cellulose, a diacetyl cellulose, cellulose acetate butyrate, cellulose acetate propionate, cyanoethyl pullulan, cyanoethyl polyvinyl alcohol, a cyanoethyl cellulose, and cyanoethyl sucrose. Preferably, it is desirable to use a carboxymethyl cellulose, a hydroxypropylmethyl cellulose, a hydroxypropyl cellulose, or a mixture thereof.

The conductive agent is a component for further improving conductivity of the negative electrode active material, wherein the conductive agent may be added in an amount of 10 wt% or less, preferably, 5 wt% or less, 3 wt% or less, 2 wt% or less, or 1 wt% or less, and may be included in an amount of 0.01 wt% or more, 0.05 wt% or more, 0.08 wt% or more, 0.1 wt% or more, or 0.3 wt% or more based on the total weight of the negative electrode material mixture layer. The conductive agent is not particularly limited as long as it has conductivity without causing chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode material mixture layer may be prepared by coating the negative electrode collector with a negative electrode slurry composition, which is prepared by dissolving or dispersing optionally the binder and the conductive agent as well as the negative electrode active material in a solvent, and drying the coated negative electrode collector, or may be prepared by casting the negative electrode slurry composition on a separate support and then laminating a film separated from the support on the negative electrode collector.

## Others: Separator and Electrolyte, etc.

The separator separates the negative electrode and the positive electrode and provides a movement path of lithium ions, wherein any separator may be used as the separator without particular limitation as long as it is typically used in a secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used, and, since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components.

## Examples

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## 1. Multi-walled Carbon Nanotube Powder

### Examples 1a to 4a and Comparative Examples 1a to 11a

Multi-walled carbon nanotube powders having particle size characteristics as listed in Table 1 below were prepared.

With respect to the particle size characteristics of the powder, a particle size distribution was calculated by measuring a difference in diffraction patterns due to the particle size when the powder was introduced into a laser diffraction particle size measurement instrument (Malvern, Mastersizer 3000) and particles passed through a laser beam. $D_{50}$, $D_{90}$, and maximum particle diameter $D_{max}$ were measured by identifying particle diameters at points where 50% and 90% were obtained in a cumulative volume distribution according to the particle diameter and at a point where the particle diameter was maximum, respectively.

With respect to a content of oxygen atoms, after an O 1s spectrum was obtained by using X-ray photoelectron spectroscopy (XPS) (Nexsa ESCA System, Thermo Fisher Scientific (ESCA-02)) under the conditions of a light source of Al-K$\alpha$ (1486.6 eV), an accelerating voltage of 1 kV/300 W, an energy resolution of about 1.0 eV, a minimum analysis area of 400 micro, and a sputter rate of 0.13 nm/min, an intensity value of each peak is listed in Table 1 below.

[Table 1]

|  | Powder particle size ($\mu$m) | | | Oxygen atom content (at%) |
|---|---|---|---|---|
|  | $D_{50}$ | $D_{90}$ | $D_{max}$ |  |
| Example 1a | 15.4 | 34.1 | 61.2 | 1.8 |
| Example 2a | 12.7 | 38.4 | 64.7 | 1.6 |
| Example 3a | 13.5 | 27.5 | 55.6 | 1.9 |
| Example 4a | 15.6 | 33.2 | 66.7 | 2.1 |
| Comparative Example 1a | 24.1 | 45.7 | 73.9 | 0.4 |
| Comparative Example 2a | 15.1 | 30.4 | 72.4 | 0.3 |
| Comparative Example 3a | 8.7 | 21.5 | 46.7 | 0.5 |
| Comparative Example 4a | 22.2 | 37.6 | 63.9 | 0.4 |
| Comparative Example 5a | 19.4 | 41.5 | 69.7 | 0.3 |
| Comparative Example 6a | 15.6 | 31.1 | 71.5 | 0.6 |
| Comparative Example 7a | 23.0 | 44.3 | 75.1 | 1.7 |
| Comparative Example 8a | 15.0 | 47.1 | 72.4 | 0.3 |
| Comparative Example 9a | 13.3 | 37.5 | 63.8 | 4.2 |
| Comparative Example 10a | 6.7 | 18.9 | 71.8 | 0.6 |
| Comparative Example 11a | 8.0 | 20.1 | 44.2 | 4.5 |

### 2. Conductive Agent Dispersion

### Examples 1b to 4b and Comparative Examples 1b to 11b

1.25 kg of the multi-walled carbon nanotube powder of each of Examples 1a to 4a and Comparative Examples 1a to 11a, 0.375 kg of HNBR as a dispersant, and 36.17 kg of N-methyl pyrrolidone were mixed, and then mixed for 180 minutes using a mixer (BTM-50, disper 1000 rpm/anchor 100 rpm). The mixed mixture was stirred for 180 minutes using a NETZSCH bead mill (NETZSCH LMZ2, bead size: 0.65 mm/2500 rpm) to obtain each conductive agent dispersion corresponding to each of Examples 1b to 4b and Comparative Examples 1b to 11b.

### Experimental Example 1: Particle Size Analysis of Conductive Agent Dispersion

With respect to particle size characteristics of the conductive agent dispersion, particle sizes of each of the conductive agent dispersions of the examples and the comparative examples were analyzed through laser diffraction and are presented in Table 2. Specifically, after dispersing the conductive agent dispersion in a solvent, a particle size distribution was calculated by measuring a difference in diffraction patterns due to the particle size when the solution was introduced into a laser diffraction particle size measurement instrument (Malvern, Mastersizer 3000) and particles passed through a laser beam. $D_{50}$ and $D_{90}$ were measured by identifying particle diameters at points where 50% and 90% were obtained in a cumulative volume distribution according to the particle diameter.

**Experimental Example 2: Viscosity Analysis**

Viscosities of the conductive agent dispersions prepared by the examples and the comparative examples were measured at 25°C and 12 rpm using a viscometer (Brookfield, viscometer DV2T, LV), and are presented in Table 2.

[Table 2]

| | Particle size | | Viscosity (cP) |
|---|---|---|---|
| | $D_{50}$ ($\mu$m) | $D_{90}$ ($\mu$m) | |
| Example 1b | 3.06 | 7.22 | 670 |
| Example 2b | 3.10 | 7.16 | 540 |
| Example 3b | 3.21 | 7.42 | 420 |
| Example 4b | 3.13 | 7.32 | 1050 |
| Comparative Example 1b | 3.61 | 8.12 | 1610 |
| Comparative Example 2b | 3.31 | 8.25 | 1750 |
| Comparative Example 3b | 2.57 | 5.13 | 1340 |
| Comparative Example 4b | 3.55 | 7.61 | 1530 |
| Comparative Example 5b | 3.58 | 8.01 | 1570 |
| Comparative Example 6b | 3.32 | 8.39 | 1620 |
| Comparative Example 7b | 3.10 | 7.10 | 650 |
| Comparative Example 8b | 3.77 | 8.30 | 1920 |
| Comparative Example 9b | 2.23 | 5.72 | 220 |
| Comparative Example 10b | 3.01 | 7.19 | 1580 |
| Comparative Example 11b | 2.41 | 4.89 | 360 |

Referring to Table 2, unlike the particle size characteristics of the multi-walled carbon nanotube powder, there was no significant difference in the particle size characteristics of the conductive agent dispersions, but, with respect to the examples satisfying the powder particle size characteristics of the present invention, since initial viscosity was considerably lower than that of the comparative examples, it may be confirmed that it was very advantageous in a dispersion process and a slurry preparation process.

**3. Lithium Secondary Battery**

**Examples 1c to 4c and Comparative Examples 1c to 11c**

A single particle type lithium nickel-based oxide particle having a composition of $LiNi_{0.6}Co_{0.1}Mn_{0.3}O_2$ was used as a positive electrode active material and the multi-walled carbon nanotube dispersions of Examples 1b to 4b and Comparative Examples 1b to 11b were used to prepare a positive electrode.

With respect to the positive electrode, the lithium nickel-based oxide, each of the multi-walled carbon nanotube dispersions of the examples and comparative examples as a conductive agent, and a PVDF binder were mixed at a weight ratio of 97.0:1.2:1.8 and a N-methylpyrrolidone solvent was added such that a solid content became 72% and mixed at 2,500 rpm for 1 hour using a homogenizer to prepare a positive electrode slurry. Thereafter, the positive electrode was prepared by coating one surface of an aluminum current collector with the slurry, drying at 130°C, and then rolling the coated aluminum current collector twice at a pressure of 2,000 kgf/cm using a roll-to-roll rolling apparatus.

Silicon particles having an average particle diameter $D_{50}$ of 5 $\mu$m were used as a negative electrode active material. A negative electrode was prepared by including a negative electrode material mixture layer which included the negative electrode active material, CMC as a negative electrode binder, and carbon nanotubes, as a negative electrode conductive agent, at a weight ratio of 80:10:10. A loading amount of the negative electrode material mixture layer was 10 mAh/cm$^2$, and a thickness was 75 $\mu$m.

The positive electrode, the negative electrode, and a porous polyethylene separator were assembled using a winding method, and an electrolyte solution (ethylene carbonate (EC) /ethylmethyl carbonate (EMC)=3/7 (volume ratio), lithium hexafluorophosphate (LiPF$_6$ 1 mol)) was injected into the assembled battery to prepare a lithium secondary battery of each of Examples 1c to 7c and Comparative Examples 1c to 10c.

The lithium secondary battery was charged at a C-rate of 0.1 C to 4.2 V and then discharged to 2.5 V to perform a formation process.

## Experimental Example 3: Battery Performance Evaluation 1 (Resistance Characteristics)

After charging and discharging the lithium secondary battery, while the lithium secondary battery was fully-charged again and then discharged, a 2.5 C pulse current was applied for a specific time according to a change in state of charge (SOC) to measure surface resistance (0.1-second resistance), charge transfer resistance (0.1 to 30-second resistance), and diffusion resistance (30-second resistance), and the results thereof are presented in Table 3. Also, for the convenience of comparison, an Index (percentile relative to a resistance value of Comparative Example 1) of each resistance value based on Comparative Example 1 was calculated.

## Experimental Example 4: Battery Performance Evaluation 2 (Life Characteristics)

Each lithium secondary battery prepared in Experimental Example 3 was charged at 0.2 C to 4.25 V in a constant current-constant voltage (CCCV) mode (end current 1/20 C). Thereafter, while charging of the lithium secondary battery at a constant current of 0.33 C to 4.25 V at 45°C and discharging of the lithium secondary battery at a constant current of 0.33 C to 2.5 V were set as one cycle and 200 cycles of the charging and discharging were performed, charge/discharge capacities were measured, and capacity retention was calculated as follows.

Capacity retention (%) = (discharge capacity after 200 cycles/discharge capacity after 1 cycle) $\times$ 100

[Table 3]

| | Resistance characteristics | | | | | | Capacity retention (%) |
|---|---|---|---|---|---|---|---|
| | Surface (m$\Omega$) | Surface Index | Charge transfer (m$\Omega$) | Charge transfer Index | Diffusion (m$\Omega$) | Diffusion Index | |
| Example 1c | 0.9969 | 93.2 | 0.3353 | 90.9 | 1.3322 | 92.6 | 80.89 |
| Example 2c | 0.9616 | 89.9 | 0.3308 | 89.6 | 1.2924 | 89.9 | 81.93 |
| Example 3c | 1.0013 | 93.6 | 0.3441 | 93.3 | 1.3454 | 93.5 | 81.49 |
| Example 4c | 0.9705 | 90.8 | 0.3352 | 90.8 | 1.3057 | 90.8 | 80.78 |
| Comparative Example 1c | 1.0692 | 100 | 0.369 | 100 | 1.4382 | 100 | 74.03 |
| Comparative Example 2c | 1.1101 | 103.8 | 0.3788 | 102.7 | 1.4889 | 103.5 | 73.68 |
| Comparative Example 3c | 1.0213 | 95.5 | 0.3549 | 96.2 | 1.3762 | 95.7 | 74.92 |
| Comparative Example 4c | 1.0303 | 96.4 | 0.3579 | 97.0 | 1.3882 | 96.5 | 74.09 |
| Comparative Example 5c | 1.0603 | 99.2 | 0.3745 | 101.5 | 1.4348 | 99.8 | 72.98 |
| Comparative Example 6c | 1.0734 | 100.4 | 0.3726 | 101.0 | 1.446 | 100.5 | 73.74 |
| Comparative Example 7c | 1.0548 | 98.7 | 0.3881 | 105.2 | 1.4429 | 100.3 | 72.16 |
| Comparative Example 8c | 1.0684 | 99.9 | 0.3694 | 100.1 | 1.4378 | 100.0 | 73.99 |
| Comparative Example 9c | 1.0711 | 100.2 | 0.3714 | 100.7 | 1.4425 | 100.3 | 71.85 |
| Comparative Example 10c | 1.0621 | 99.3 | 0.3855 | 104.5 | 1.4476 | 100.7 | 75.21 |
| Comparative Example 11c | 1.0588 | 99.0 | 0.3496 | 94.7 | 1.4084 | 97.9 | 74.53 |

Referring to Table 3, with respect to the lithium secondary batteries of Examples 1c to 4c, it may be confirmed that the measured resistance values were about 10% lower than those of Comparative Example 1c, but the measured resistance values of the comparative examples were similar to those of Comparative Example 1c, and it may be confirmed that capacity degradation occurred more quickly in the comparative examples because life characteristics also showed a difference of about 7% to 8% between the examples and the comparative examples, wherein since the fact that this much difference was shown at 200 cycles means that it may be expected that the difference may increase exponentially after a long period of time such as about 500 cycles, dispersibility and viscosity characteristics of the predispersion may be improved by controlling the particle size characteristics of the multi-walled carbon nanotube powder, and accordingly, it was confirmed that cell characteristics may be improved.

**Claims**

1.    Multi-walled carbon nanotube powder having:

an average particle diameter ($D_{50}$) at a cumulative volume of 50% of 10 $\mu$m to 20 $\mu$m,
an average particle diameter ($D_{90}$) at a cumulative volume of 90% of 20 $\mu$m to 40 $\mu$m,
a maximum particle diameter ($D_{max}$) of 45 $\mu$m to 70 $\mu$m, in a particle size distribution (PSD) measured by a particle size analyzer in a dry powder state, and
a content of oxygen atoms, which is measured by X-ray photoelectron spectroscopy (XPS) analysis, of 1.0 at% to 3.0 at%.

2.    The multi-walled carbon nanotube powder of claim 1, wherein the average particle diameter ($D_{50}$) at a cumulative volume of 50% is in a range of 13 $\mu$m to 19 $\mu$m.

3.    The multi-walled carbon nanotube powder of claim 1, wherein the average particle diameter ($D_{90}$) at a cumulative volume of 90% is in a range of 28 $\mu$m to 40 $\mu$m.

4.    The multi-walled carbon nanotube powder of claim 1, wherein the maximum particle diameter ($D_{max}$) is in a range of 54 $\mu$m to 70 $\mu$m.

5.    The multi-walled carbon nanotube powder of claim 1, wherein the content of oxygen atoms, which is measured by XPS analysis, is in a range of 1.5 at% to 2.5 at%.

6.    The multi-walled carbon nanotube powder of claim 1, wherein a BET specific surface area is in a range of 150 m$^2$/g to 300 m$^2$/g.

7.    A conductive agent dispersion comprising the multi-walled carbon nanotube powder of claim 1, a dispersant, and an organic solvent.

8.    The conductive agent dispersion of claim 7, wherein 0.5 part by weight to 10 parts by weight of the multi-walled carbon nanotube powder and 0.5 part by weight to 20 parts by weight of the dispersant are included based on 100 parts by weight of the conductive agent dispersion.

9.    The conductive agent dispersion of claim 7, wherein the dispersant comprises at least one selected from the group consisting of polyacrylate, polyvinylidene fluoride (PVDF), polyvinylpyrrolidone (PVP), polyvinyl alcohol, polyacrylamide, polyethyleneoxide, carboxymethyl cellulose (CMC), and diisopropylamine (DIPA).

10.    A lithium secondary battery comprising:

a positive electrode including a positive electrode collector and a positive electrode material mixture layer; a negative electrode including a negative electrode collector and a negative electrode material mixture layer; and a separator disposed between the positive electrode and the negative electrode,
wherein at least one of the positive electrode material mixture layer and the negative electrode material mixture layer comprises the multi-walled carbon nanotube powder of claim 1.

11.    The lithium secondary battery of claim 10, wherein the positive electrode material mixture layer comprises a positive electrode active material, and

the positive electrode active material comprises at least one selected from the group consisting of a lithium nickel-based oxide and a lithium metal phosphate-based compound.

12. The lithium secondary battery of claim 11, wherein the positive electrode active material is a single particle type, and has a degree of single particle formation ($D_{50}/D_{mean}$), which is a ratio of a volume-cumulative average particle diameter ($D_{50}$) to an average particle diameter ($D_{mean}$) of nodules, of 1 to 10.

13. The lithium secondary battery of claim 11, wherein the lithium nickel-based oxide has a composition represented by Formula 1, and

the lithium metal phosphate-based compound has a composition represented by Formula 2:

[Formula 1]  $Li_{1+x}Ni_aCo_bM^1{}_cM^2{}_dO_{2-e}X_e$

wherein, in Formula 1, $M^1$ comprises at least one selected from Mn and Al, $M^2$ comprises at least one selected from the group consisting of W, Zr, Y, Ba, Ca, Ti, V, Mg, Ta, and Nb, X comprises at least one selected from the group consisting of N, P, S, F, and Cl, and $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$, and

[Formula 2]  $Li_{1+x}[Fe_{1-y}M_y]PO_4$

wherein, in Formula 2, M comprises at least one selected from the group consisting of Mn, Co, Ni, Al, Mg, and Ti, and $-0.5 \leq x \leq 0.5$ and $0 \leq y < 1$.

14. The lithium secondary battery of claim 10, wherein the negative electrode material mixture layer comprises a negative electrode active material, and
the negative electrode active material comprises at least one selected from the group consisting of a silicon-based active material, a carbon-based active material, and a silicon-carbon composite active material.

## INTERNATIONAL SEARCH REPORT

| International application No. |
|---|
| **PCT/KR2024/096309** |

| A. | CLASSIFICATION OF SUBJECT MATTER |
|---|---|

**C01B 32/158**(2017.01)i; **C01B 32/174**(2017.01)i; **C01G 53/00**(2006.01)i; **H01M 4/62**(2006.01)i; **H01M 4/131**(2010.01)i; **H01M 4/134**(2010.01)i; **H01M 4/505**(2010.01)i; **H01M 4/525**(2010.01)i; **H01M 4/38**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

C01B 32/158(2017.01); C01B 32/05(2017.01); H01M 10/052(2010.01); H01M 10/0525(2010.01); H01M 4/13(2010.01); H01M 4/36(2006.01); H01M 4/505(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중벽 탄소나노튜브(multi-walled carbon nanotube), 분체(powder), 입경(particle size), 산소(oxygen)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-1954430 B1 (LG CHEM, LTD.) 05 March 2019 (2019-03-05)<br>See claims 1-15; and paragraphs [0044]-[0161] and [0284]-[0287]. | 1-14 |
| A | US 2023-0207781 A1 (UMICORE) 29 June 2023 (2023-06-29)<br>See claims 16-32. | 1-14 |
| A | CN 107098326 A (HUNAN XINGCHENG GRAPHITE TECHNOLOGY CO., LTD.) 29 August 2017 (2017-08-29)<br>See claims 1-6. | 1-14 |
| A | US 2023-0118425 A1 (SUMITOMO CHEMICAL COMPANY, LIMITED) 20 April 2023 (2023-04-20)<br>See claims 21-44. | 1-14 |
| A | QI, Z. et al. Influence of graphite Gibbs surface free energy on the initial viscosity and stability of traditional anode slurry in lithium-ion batteries. Journal of Central South University. 27 April 2023, vol. 30, pp. 665-676.<br>See abstract; and pages 665-674. | 1-14 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 January 2025** | **16 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/096309**

| Patent document cited in search report | | | Publication date (day/month/year) | Patent family member(s) | | | Publication date (day/month/year) |
|---|---|---|---|---|---|---|---|
| KR | 10-1954430 | B1 | 05 March 2019 | CN | 107851801 | A | 27 March 2018 |
| | | | | CN | 107851801 | B | 08 December 2020 |
| | | | | EP | 3301745 | A1 | 04 April 2018 |
| | | | | EP | 3301745 | A4 | 30 May 2018 |
| | | | | EP | 3301745 | B1 | 18 September 2019 |
| | | | | JP | 2018-534747 | A | 22 November 2018 |
| | | | | JP | 6749703 | B2 | 02 September 2020 |
| | | | | KR | 10-2017-0049459 | A | 10 May 2017 |
| | | | | US | 11050061 | B2 | 29 June 2021 |
| | | | | US | 2018-0198129 | A1 | 12 July 2018 |
| US | 2023-0207781 | A1 | 29 June 2023 | CN | 115485881 | A | 16 December 2022 |
| | | | | EP | 4139975 | A1 | 01 March 2023 |
| | | | | EP | 4139975 | B1 | 12 June 2024 |
| | | | | JP | 2023-523736 | A | 07 June 2023 |
| | | | | JP | 7499352 | B2 | 13 June 2024 |
| | | | | KR | 10-2023-0002955 | A | 05 January 2023 |
| | | | | WO | 2021-213846 | A1 | 28 October 2021 |
| CN | 107098326 | A | 29 August 2017 | CN | 107098326 | B | 10 September 2019 |
| US | 2023-0118425 | A1 | 20 April 2023 | CN | 114982015 | A | 30 August 2022 |
| | | | | EP | 4092784 | A1 | 23 November 2022 |
| | | | | JP | 2021-114406 | A | 05 August 2021 |
| | | | | JP | 6734491 | B1 | 05 August 2020 |
| | | | | KR | 10-2022-0127242 | A | 19 September 2022 |
| | | | | WO | 2021-145438 | A1 | 22 July 2021 |

Form PCT/ISA/210 (patent family annex) (July 2022)